# EUROPEAN PATENT SPECIFICATION

(11) **EP 3 293 870 B1**
(45) Date of publication and mention of the grant of the patent: **10.04.2019**
(21) Application number: 16789017.7
(22) Date of filing: 04.02.2016
(51) Int. Cl.: H02K 16/04, H02K 55/00

(54) **DUAL-STATOR SUPERCONDUCTIVE EXCITING FIELD MODULATING MOTOR**
SUPRALEITENDER ERREGUNGSFELDMODULIERENDER DOPPELSTATORMOTOR
MOTEUR SUPRACONDUCTEUR À DOUBLE STATOR AVEC MODULATION DU CHAMP D'EXCITATION

(30) Priority: 06.05.2015 CN 201510228203
(43) Date of publication of application: 14.03.2018
(73) Proprietor: Southeast University, Nanjing, Jiangsu 210096 (CN)
(72) Inventor: CHENG, Ming, Nanjing, Jiangsu 210096 (CN); WANG, Yubin, Nanjing, Jiangsu 210096 (CN); HUA, Wei, Nanjing, Jiangsu 210096 (CN); WANG, Zheng, Nanjing, Jiangsu 210096 (CN)
(74) Representative: Laufhütte, Dieter
(86) International application number: PCT/CN2016/073416
(87) International publication number: WO 2016/177023

(56) References cited:
- EP-A2- 2 133 981
- EP-A2- 2 611 007
- WO-A1-2011/088946
- CN-A- 102 290 938
- CN-A- 103 166 426
- CN-A- 104 883 015
- CN-U- 202 221 950
- CN-U- 204 652 178
- JP-A- 2008 109 731

## Description

### BACKGROUND OF THE INVENTION

### Field of the Invention

The present invention relates to the field of machine technologies, and in particular, to a field modulating machine having a superconductive exciting function.

### Description of Related Art

With rapid development of offshore wind power, marine power propulsion, and the like, requirements on technical indexes such as the size, weight, and efficiency of a machine system become increasingly high. Taking a wind turbine generator as an example, as wind power generation develops from land to sea, in order to enhance the efficiency of power generation and reduce costs of power generation per capacity, the unit capacity of the generator is made higher and higher. A wind turbine generator set of 5 MW has been put into use. Currently, a wind turbine generator of 10 MW or higher is under development internationally. With increase in the unit capacity of the generator, the weight and size of a generator set also become considerably huge. For example, the weight of a 10-MW common permanent-magnet direct-drive wind turbine generator reaches up to 300 tons, and the diameter thereof exceeds 10 meters, posing severe challenge to the tower, and making it tougher to manufacture, transport, and install the wind turbine generator set. Therefore, how to reduce the size and weight of the wind turbine generator and enhance the efficiency of power generation becomes the focus of attention at home and abroad.

With rapid development of high-temperature superconducting technologies in recent years, broad and in-depth research on high-temperature superconducting materials is carried out in the field of machines and the like. According to existing statistics, cooled by liquid nitrogen, a high-temperature superconducting block can capture a magnetic field having an intensity up to 2.3 T-77 K, which is much higher than the intensity of the magnetic field of an existing permanent magnet. Moreover, the critical current density of a second-generation high-temperature superconducting Y-series material has reached up to 3×10⁶ A/cm²(77 K, 0 T). The above indicates that, replacing a winding and a permanent magnet in a traditional machine with the high-temperature superconducting material can remarkably enhance the power density of the machine, and reduce the weight and size of the machine. Existing studies show that a 10-MW superconducting machine has a weight of only 150 tons and a diameter less than 5 meters. Thus, both the weight and size can be reduced to 50% of those of a conventional machine.

However, for a synchronous machine of a conventional structure, an exciting winding is disposed on a rotor. Therefore, an excitation current needs to pass through a brush and a slip ring to be imported, and rotating seal is required for input of a cooling liquid, thus complicating the machine structure, increasing the costs and reducing the reliability. In addition, for a superconductive exciting flux-switching machine evolved from a stator exciting machine (for example, a flux-switching permanent magnet machine) appearing in recent years, the working principle thereof determines that a salient-pole stator and a rotor of the machine need to be made of ferromagnetic materials. However, saturated flux density of the ferromagnetic materials limits the performance of the superconducting materials. In addition, the exciting winding and armature winding are disposed in the same stator iron core, which makes the spatial arrangement difficult, and limits further enhancement of the power density of the machine. Therefore, it is of great significance to develop a novel stable superconducting machine having high power density, high efficiency, and a simple structure.

### SUMMARY OF THE INVENTION

Invention objective: The present invention provides a dual-stator superconductive exciting field modulating machine, which is provided with a static superconductive exciting winding, and has high torque density and a high power factor. Therefore, the machine is applicable to a high-power situation, thus solving the foregoing problems in the prior art.

Technical solution: A dual-stator superconductive exciting field modulating machine includes a first stator, a rotor and a second stator which are provided successively from outside to inside or from the left to the right, where a first air gap is provided between the first stator and the rotor, and a second air gap is provided between the second stator and the rotor.

The first stator includes a stator yoke and an armature winding, the stator yoke being provided with a first side face close to the rotor, and the armature winding being arranged on the first side face; the rotor includes magnetic conductive iron core blocks and non-magnetic conductive blocks which are arranged at intervals; and the second stator includes a non-magnetic conductive stator support and a high-temperature superconductive exciting winding fixed on the stator support.

The number of pole pairs of the superconductive exciting winding of the second stator *p_{sc},* the number of the magnetic conductive iron core blocks of the rotor *nᵣ,* and the number of equivalent pole pairs of the armature winding *pₛ* meet the following relationship: *p_{sc}*=*nᵣ*-*pₛ.*

Preferably, the armature winding is a conventional armature winding or a high-temperature superconductive winding. The armature winding is a concentrated winding or a distributed winding. A stator iron core may be of a salient-pole structure or a non-salient pole structure. Stator teeth are evenly provided on a side of the first stator close to the rotor, slots are formed between adjacent stator teeth, and the armature winding is embedded into the slots.

Beneficial effects: Compared with an existing machine of a similar type, as known from EP-A-2611007, the present invention has the following advantages:
1. The armature winding and the superconductive exciting winding are arranged on the first stator and the second stator respectively, thus enhancing spatial utilization and achieving a compact structure.
2. The high-temperature superconductive exciting winding is arranged on the second stator and stays static, which not only utilizes a characteristic of the high-temperature superconductive winding being suitable for the direct current, but also avoids the problem of the rotating seal of cooling liquid required by a traditional rotor exciting high-temperature superconducting machine. An excitation current can be directly imported without passing through a brush and a slip ring. The superconductive cooling liquid can be directly introduced without rotating seal. Therefore, the machine has a simple structure, a low cost, a satisfactory cooling effect, and high reliability, and is energy efficient.
3. The second stator does not have an iron core. Then, without the limitation of the saturation characteristic of the iron core, the intensity of an air-gap magnetic field can be 2.5 T or higher, thus enhancing torque density/power density of the machine.
4. Under the modulation effect of a rotor magnetic conductive block, with a fixed number of pole pairs of the superconductive exciting field of the second stator, a required number of field pole pairs can be obtained in an outer air gap by properly designing the number of the modulation magnets, thus implementing self-acceleration or self-deceleration.
5. It is convenient to use a modularized structure for the machine stator, thus facilitating delivery and on-site installation. Therefore, the present invention can be well applied in a situation such as offshore wind power.
6. The armature winding is provided on the outer stator, thus facilitating heat dissipation and cooling. The superconductive exciting winding is provided on the inner stator. Because the superconducting winding is low in loss and is further cooled by the superconducting cooling liquid, it is no longer necessary take a special cooling measure that is used to dissipate heat from a conventional dual-stator machine as an inner stator is enclosed by a rotor and an outer stator.

### BRIEF DESCRIPTION OF THE DRAWINGS

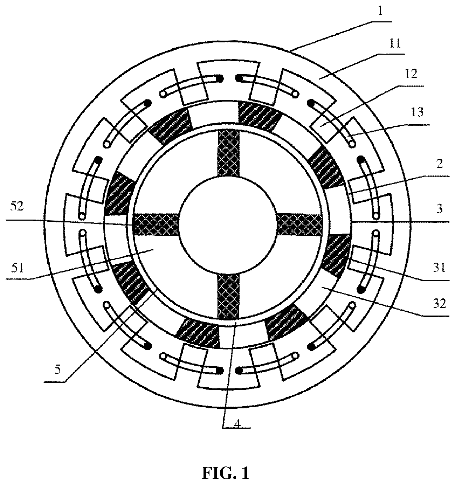

FIG. 1 is a schematic structural diagram of a cross section of the present invention.

### DETAILED DESCRIPTION OF THE INVENTION

As shown in FIG. 1, a first stator, a rotor, and a second stator are arranged concentrically. The first stator 1 (an outer stator), a first air gap 2 (an outer air gap), the rotor 3, a second air gap 4 (an inner air gap), and the second stator 5 (an inner stator) are coaxially and successively arranged from outside to inside. The first stator 1 (the outer stator) includes a stator yoke 11, stator teeth 12, and an outer stator centralized winding 13 embedded in an outer stator recess.

The rotor 3 includes magnetic conductive iron core blocks 31 and non-magnetic conductive blocks 32 that are evenly distributed along the circumference. The second stator 5 (the inner stator) includes a non-magnetic conductive stator support 51 and a high-temperature superconductive exciting winding 52 fixed on the support. The first stator 1 (the outer stator) is provided with twelve teeth, a centralized winding being sleeved on each teeth. The windings on the twelve teeth are connected according to a rule, to form symmetrical three-phase windings. The rotor is formed by eight magnetic conductive iron core blocks and eight non-magnetic conductive blocks that are arranged at intervals and distributed evenly along the circumference. A magnetic field with two pole pairs is formed after a direct current is connected to four superconductive exciting coils on the second stator 5 (the inner stator), and a magnetic field with six pole pairs is formed in the outer air gap 2 after modulation by a rotor magnetic conductive block.

In the present invention, different numbers of pole pairs may be designed for the superconductive exciting winding on the second stator 5 (the inner stator) according to an application requirement. A different number of magnetic conductive iron core blocks of the rotor may be used as required. The number of pole pairs of the superconductive exciting field *p_{sc},* the number of the magnetic conductive iron core blocks of the rotor *nᵣ,* and the number of equivalent pole pairs of the armature winding of the outer stator *pₛ* meet the following relationship: *nᵣ*=*p_{sc}*+*pₛ.*

In the present invention, the iron core of the outer stator may use a non-salient pole structure. The armature winding may be a distributed winding. The armature winding may be fixed on the iron core of the outer stator by means of epoxy casting or the like.

In the present invention, the dimension and the shape of the magnetic conductive iron core block of the rotor may be optimized according to a design requirement.

In the dual-stator superconductive exciting field modulating machine of the present invention, the number of pole pairs of the armature winding field of the outer stator is different from the number of pole pairs of the superconductive exciting field of the inner stator.

Working principle: When a superconducting material enters a superconducting state, the direct-current resistance thereof is 0. The superconducting material may conduct a large direct current for excitation, such that a strong magnetic field with *p_{sc}* pole pairs is built in the inner air gap. After modulation by a rotor magnetic conductive block, a magnetic field with *pₛ* pole pairs is built in the outer air gap, where this magnetic field links to the armature winding on the outer stator. If the rotor is dragged to run by a prime motor, the magnetic field in the outer air gap makes an alternation accordingly, to induce an electromotive force in the armature winding and output electric power. If the armature winding is supplied with an alternating current, the current and the magnetic field interact with each other to produce electromagnetic torque, to drive the rotor to run, thus outputting mechanical power.

In the present invention, in addition to be arranged concentrically from outside to inside, the outer stator, the outer air gap, the rotor, the inner air gap, and the inner stator of the dual-stator superconductive exciting field modulating machine may also be arranged from left to right (or in an opposite direction), to form a dual-stator superconductive exciting field modulating machine with an axial magnetic field. In the present invention, the high-temperature superconducting material generally refers to a superconducting material with a temperature being higher than the liquid nitrogen temperature (77 K).

In summary, in the present invention, the high-temperature superconductive exciting winding is disposed on the inner stator and the armature winding is disposed on the outer stator, and under the field modulation effect of the magnetic conductive iron core block of the rotor, the field of the machine can self-accelerate. Compared with an existing superconducting machine, the present invention makes the superconductive winding static, does not need a brush, a slip ring or rotating seal, and implements self-acceleration or self-deceleration under the field modulation effect of the magnetic conductive iron core block of the rotor. The present invention has a compact structure. The windings easily get wound. The size and weight of the machine are remarkably reduced, and the torque density is enhanced. Therefore, the dual-stator superconductive exciting field modulating machine of the present invention has a high scientific research value and engineering practical value.

The preferred embodiments of the present invention are described in detail above. However, the present invention is not limited to the specific details of the embodiments described above. Various equivalent variations may be made to the technical solutions of the present invention within the scope of the technical concept of the present claims. These equivalent variations all belong to the protection scope of the present claims. In addition, it should be noted that the specific technical features described in the foregoing specific embodiments may be combined in any suitable manner without contradictions. In order to avoid unnecessary repetitions, the present invention does not additionally describe the possible combination manners.

## Claims

1. A dual-stator superconductive exciting field modulating machine, comprising: a first stator (1), a rotor (3) and a second stator (5) which are provided successively from outside to inside or from the left to the right, wherein a first air gap (2) is provided between the first stator and the rotor, and a second air gap (4) is provided between the second stator and the rotor;
the first stator comprises a stator yoke (11) and an armature winding (13), the stator yoke being provided with a first side face close to the rotor, and the armature winding being arranged on the first side face; the rotor comprises magnetic conductive iron core blocks (31) and non-magnetic conductive blocks (32) which are arranged at intervals; and the second stator comprises a non-magnetic conductive stator support (51) and a high-temperature superconductive exciting winding (52) fixed on the stator support; and
the number of pole pairs of the superconductive exciting winding of the second stator *p_{sc},* the number of the magnetic conductive iron core blocks of the rotor *nᵣ,* and the number of equivalent pole pairs of the armature winding *pₛ* meet the following relationship: *p_{sc}*=*nᵣ*-*pₛ.*

2. The dual-stator superconductive exciting field modulating machine according to claim 1, wherein the armature winding (13) is a conventional armature winding or a high-temperature superconductive winding.

3. The dual-stator superconductive exciting field modulating machine according to claim 1, wherein the armature windings (13) is a concentrated winding or a distributed winding.

4. The dual-stator superconductive exciting field modulating machine according to claim 1, wherein a stator iron core is of a salient-pole structure or a non-salient pole structure.

5. The dual-stator superconductive exciting field modulating machine according to claim 4, wherein stator teeth (12) are evenly provided on the side of the first stator close to the rotor, slots are formed between adjacent stator teeth, and the armature winding is embedded into the slots.

## Patentansprüche

1. Supraleitende, Erregungsfeld-modulierende Doppelstatormaschine, aufweisend: einen ersten Stator (1), einen Rotor (3), und einen zweiten Stator (5), die nacheinander von außen nach innen, oder von links nach rechts bereitgestellt sind, wobei ein erster Luftspalt (2) zwischen dem ersten Stator und dem Rotor bereitgestellt ist, und ein zweiter Luftspalt (4) zwischen dem zweiten Stator und dem Rotor bereitgestellt ist;
der erste Stator weist ein Statorjoch (11) und eine Ankerwicklung (13) auf, wobei das Statorjoch mit einer ersten Seitenfläche nahe dem Rotor bereitgestellt ist, und wobei die Ankerwicklung auf der ersten Seitenfläche angeordnet ist; der Rotor weist magnetische, leitfähige Eisenkernblöcke (31) und nichtmagnetische leitfähige Blöcke (32) auf, die beabstandet angeordnet sind; und der zweite Stator weist einen nichtmagnetischen, leifähigen Statorträger (51) und eine hochtemperatur-supraleitende Erregerwicklung (52), die an dem Statorträger befestigt ist, auf; und
die Anzahl von Polpaaren der supraleitenden Erregerwicklung des zweiten Stators p_{sc}, die Anzahl der magnetischen, leitfähigen Eisenkernblöcke des Rotors *nr,* und die Anzahl der äquivalenten Polpaare der Ankerwicklung pₛ erfüllen die folgende Beziehung: *p_{sc}* = *nᵣ*-*pₛ.*

2. Supraleitende, Erregungsfeld-modulierende Doppelstatormaschine nach Anspruch 1, wobei die Ankerwicklung (13) eine herkömmliche Ankerwicklung oder eine supraleitende Hochtemperaturwicklung ist.

3. Supraleitende, Erregungsfeld-modulierende Doppelstatormaschine nach Anspruch 1, wobei die Ankerwicklung (13) eine konzentrierte Wicklung oder eine verteilte Wicklung ist.

4. Supraleitende, Erregungsfeld-modulierende Doppelstatormaschine nach Anspruch 1, wobei ein Statoreisenkern eine Struktur mit ausgeprägtem Pol oder eine Struktur mit nicht ausgeprägtem Pol besitzt.

5. Supraleitende, Erregungsfeld-modulierende Doppelstatormaschine nach Anspruch 4, wobei Statorzähne (12) gleichmäßig auf der Seite des ersten Stators nahe dem Rotor vorgesehen sind, Nuten zwischen benachbarten Statorzähnen gebildet sind, und die Ankerwicklung in den Nuten eingebettet ist.

## Revendications

1. Machine de modulation du champ d'excitation d'un moteur supraconducteur à double stator, la machine comprenant : un premier stator (1), un rotor (3) et un second stator (5) prévus successivement de l'extérieur vers l'intérieur ou de gauche à droite, un premier entrefer (2) étant prévu entre le premier stator et le rotor, et un second entrefer (4) étant prévu entre le second stator et le rotor ;
le premier stator comprend une culasse (11) de stator et un enroulement d'induit (13), la culasse de stator étant pourvue d'une première face latérale proche du rotor, et l'enroulement d'induit étant agencé sur la première face latérale ; le rotor comprend des blocs de noyaux de fer conducteurs magnétiques (31) et des blocs conducteurs non-magnétiques (32) agencés à intervalles ; et le second stator comprend un support de stator conducteur non-magnétique (51) et un enroulement d'excitation supraconducteur à haute température (52) fixé sur le support de stator ; et
le nombre de paires de pôles de l'enroulement d'excitation supraconducteur du second stator *p_{sc},* le nombre de blocs de noyaux de fer conducteurs magnétiques du rotor *nᵣ* et le nombre de paires de pôles équivalents de l'enroulement d'induit *pₛ* satisfassent la relation suivante : *p_{sc}*=*nᵣ*-*pₛ.*

2. La machine de modulation du champ d'excitation d'un moteur supraconducteur à double stator selon la revendication 1, dans laquelle l'enroulement d'induit (13) est un enroulement d'induit classique ou un enroulement supraconducteur à haute température.

3. La machine de modulation du champ d'excitation d'un moteur supraconducteur à double stator selon la revendication 1, dans laquelle l'enroulement d'induit (13) est un enroulement concentré ou un enroulement réparti.

4. La machine de modulation du champ d'excitation d'un moteur supraconducteur à double stator selon la revendication 1, dans laquelle un noyau de fer du stator présente une structure de pôle saillant ou une structure de pôle non saillant.

5. La machine de modulation du champ d'excitation d'un moteur supraconducteur à double stator selon la revendication 4, dans laquelle les dents (12) du stator sont agencées uniformément du côté du premier stator proche du rotor, des fentes sont formées entre des dents de stator adjacentes, et l'enroulement d'induit est incorporé dans les fentes.
